Europäisches Patentamt

European Patent Office

Office européen des brevets

(19)

(11) Veröffentlichungsnummer: **0 009 187**
**A1**

(12) # EUROPÄISCHE PATENTANMELDUNG

(21) Anmeldenummer: **79103342.6**

(22) Anmeldetag: **07.09.79**

(51) Int. Cl.³: **G 01 N 22/04**

(30) Priorität: **16.09.78 DE 2840436**

(43) Veröffentlichungstag der Anmeldung: **02.04.80**
**Patentblatt 80/7**

(84) Benannte Vertragsstaaten: **AT CH DE FR GB IT NL SE**

(71) Anmelder: **HOECHST AKTIENGESELLSCHAFT,**
**Zentrale Patentabteilung Postfach 80 03 20, D-6230**
**Frankfurt/Main 80 (DE)**

(72) Erfinder: **Glander, Siegfried, Dr., Wiesenweg 15,**
**D-6232 Bad Soden am Taunus (DE)**

(54) **Verfahren und Vorrichtung zum Messen der Feuchte von flächenförmigen Proben durch Absorption von Mikrowellen.**

(57) Beim Messen der Feuchte von flächenförmigen Proben (9) durch Absorption von frequenzmodulierten Mikrowellen werden die Mikrowellen mehrmals, z.B. drei- bis fünfmal durch die Probe geleitet. Das geschieht in einer Weise, daß die vom ersten Mikrowellenempfänger (8) aufgefangenen Mikrowellen von einem mit diesem Empfänger in Reihe geschalteten Mikrowellenstrahler (7a) wieder auf die Probe gesendet werden. Dieser Vorgang kann fortgesetzt werden. Die von der Probe nicht absorbierte Mikrowellenenergie wird mit einem endständigen Mikrowellenempfänger (8c) mit Meßdetektor (11) aufgefangen und gleichgerichtet. Aus dem gleichgerichteten Signal und einer Referenzspannung (13) bildet man die Differenz und bestimmt aus dieser Differenzspannung (12) die Feuchte der Probe.

EP 0 009 187 A1

- 1 -

HOECHST AKTIENGESELLSCHAFT     HOE 78/F 193     D.Ph.HS/sch

Verfahren und Vorrichtung zum Messen der Feuchte von
flächenförmigen Proben durch Absorption von Mikrowellen

Gegenstand der Erfindung ist ein Verfahren zum Messen der Feuchte im
Bereich der Restfeuchte von flächenförmigen Proben wie Probenbahnen aus
Textilmaterial, Papier, Kunststoff usw. durch Absorption
von frequenzmodulierten Mikrowellen. Gegenstand der Erfindung ist ferner eine Vorrichtung zur Durchführung dieses
Verfahrens.

Die Restfeuchte von Proben, z.B. Textilbahnen ist die
Flüssigkeitsmenge, die ein trockenes Gut bei 65 % relativer Luftfeuchtigkeit und 20°C während der Lagerung aus
der Luft aufnimmt. Die Restfeuchte wird üblich in Prozent
bezogen auf das Trockengewicht des Gutes angegeben. Bei
Baumwolle beträgt die so definierte Restfeuchte z.B. 8,5 %.

Das Messen der Restfeuchte in Textilien und die Steuerung
der Trockenmaschine in Abhängigkeit von diesen Meßwerten
ist bekannt. Die Restfeuchte wird bei kontinuierlicher
Arbeitsweise mit der Leitfähigkeitsmeßmethode bestimmt.
Dazu wird zwischen zwei Metallwalzen eine Spannung angelegt
und der feuchtigkeitsabhängige Widerstand der zwischen
diesen Elektroden laufenden Proben als Maß für die Feuchte
benutzt. Diese Meßmethode ist nicht für vollsynthetische
Textilmaterialien und häufig auch nicht für Mischgewebe,
die synthetisches Material enthalten, anwendbar, weil die
elektrostatische Aufladung und die in Synthetiks eigentümliche Wasseranlagerung diese Leitfähigkeitsmeßmethode bei der die Textilbahn von den walzenförmigen Meßelektroden berührt wird, unbrauchbar machen.

Eine weitere Feuchtemeßmethode ist die Infrarot-Reflexionsmessung. Die Eindringtiefe dieser Strahlen ist relativ klein, so daß aus der Oberflächenfeuchte auf die Gesamtfeuchte der flächenförmigen Probe geschlossen werden muß. Die Messung wird außerdem von der Oberflächenstruktur der Proben beeinflußt.

Nach der deutschen Gebrauchsmusterschrift 76 38 683 ist eine Vorrichtung zum Messen der Feuchte von flächenförmigen Proben mit Mikrowellen bekannt. Die Vorrichtung ist zum Messen der eingangs angesprochenen Restfeuchte nicht empfindlich genug. Nach G.-I.-T. Fachzeitschrift für das Laboratorium, September 1974, Seiten 869 - 880 ist ein Verfahren und eine Vorrichtung zum Messen der Restfeuchte mit Mikrowellen bekannt. Die zu untersuchende Probe wird durch den Luftspalt eines Meßresonators geführt und die Spitzenamplitude des Transmissionssignals zur Feuchtebestimmung benutzt. Nachteilig bei dieser Durchstrahlungsart ist, daß für verschiedene Feuchtebereiche die Anzahl der Durchstrahlungen in dem Resonator über eine Änderung der Güte des Resonators, z.B. durch Änderung der Durchmesser der Ein- und Ausgangskoppellöcher, angepasst werden müssen.

Es besteht daher die Aufgabe, ein Verfahren zu schaffen, mit dem der Feuchtegehalt von Proben unabhängig von deren elektrostatischen Eigenschaften und berührungslos kontinuierlich bestimmt werden kann und das die bei den oben aufgezählten bekannten Verfahren aufgezeigten Mängel nicht aufweist. Es besteht ferner die Aufgabe eine Vorrichtung zur Durchführung dieses Verfahrens zu schaffen.

Die Aufgabe wird dadurch gelöst, daß man Mikrowellen mehrmals, vorzugsweise 3 bis 5mal, durch die Probe strahlt und zwar so, daß die von einem ersten Mikrowellenempfänger empfangenen Mikrowellen von einem mit diesem Empfänger in Reihe geschalteten Mikrowellenstrahler wieder auf die Probe gesendet werden und sofort, daß man die von der Probe nicht absorbierte Mikrowellenenergie mit einem endständigen Mikrowellenempfänger auffängt, daraus eine Gleichspannung erzeugt, aus dieser Gleichspannung und einer konstanten Referenzspannung die Differenz bildet und aus dieser Differenzspannung die     Feuchte bestimmt.

Die flächenförmige Probe wird also zwischen den jeweils paarweise gegenüberstehenden Hornstrahlern berührungslos hindurchgeführt. Die Mikrowelle wird vorteilhafterweise mit 100 Hz und einem Hub von über 25 % moduliert, damit Flatterbewegungen der Probenbahn senkrecht zur Bewegungsrichtung dieser Bahn keinen Einfluß auf die Messung haben. Für die hohe Meßempfindlichkeit und -genauigkeit ist eine Regelung der Mikrowellenausgangsleistung und eine Thermostatisierung des Meß- und Regeldetektors von Vorteil.

Die Aufgabe wird weiterhin durch eine Vorrichtung gelöst, die dadurch gekennzeichnet ist, daß ein Mikrowellenstrahler mit einem Mikrowellenoszillators verbunden ist, gegenüber dem Mikrowellenstrahler ein erster Mikrowellenempfänger angeordnet ist, der über einen Hohlleiter mit einem zweiten Mikrowellenstrahler verbunden ist, gegenüber diesem zweiten Mikrowellenstrahler wieder ein Mikrowellenempfänger angeordnet ist und sofort, der letzte Mikrowellenempfänger einen Meßdetektor mit Gleichrichter aufweist, der mit einem Differenzverstärker, an den eine konstante Referenzspannungsquelle angeschlossen ist, verbunden ist.

Bei jedem Übergang von einem Mikrowellenstrahler zum gegenüberliegenden Mikrowellenempfänger verändert sich die Mikrowellenleistung ohne Probe etwa um 20 %. Die Empfindlichkeit - Meßsignal im Verhältnis zu den Nullpunktsschwankungen - erhöht sich aber bei jeder weiteren als der ersten Durchstrahlung um ungefähr 100 % bezogen auf die Einfachdurchstrahlung.

Gegenüber den bekannten, oben erwähnten Mikrowellenfeuchtemeßgeräten mit einfacher Durchstrahlung sind mit dem erfindungsgemäßen Verfahren Feuchten von ca. 1 g Wasser/m² mit ausreichender Genauigkeit reproduzierbar meßbar. Das Gerät erlaubt das Messen von Feuchten zwischen 1 und 30 g Wasser/m². Gegenüber den bekannten, oben erwähnten Mikrowellenrestfeuchtemeßgeräten mit aufgeschlitztem Resonator ist bei dem erfindungsgemäßen Verfahren keine Anpassung an verschiedene Feuchtebereiche nötig; durch einfache Meßbereichsumschaltung können auch höhere Feuchten als 30 g Wasser/m² mit dem erfindungsgemäßen Verfahren gemessen werden.

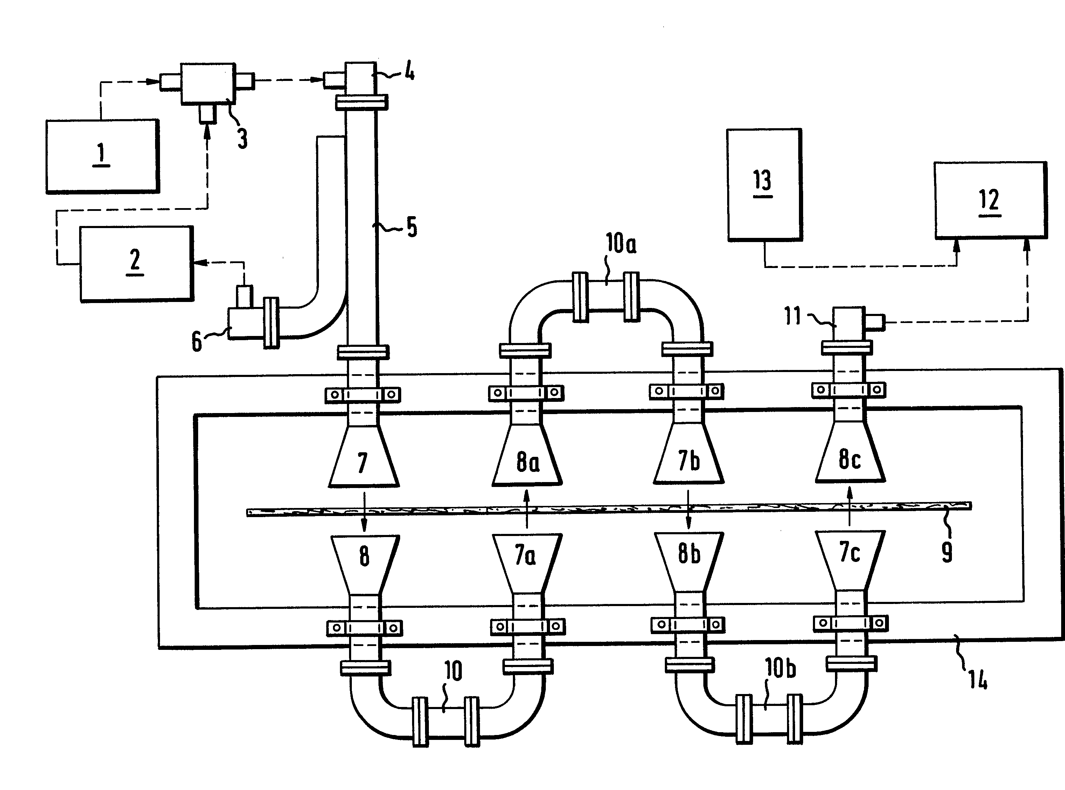

Das erfindungsgemäße Verfahren sowie die erfindungsgemäße Vorrichtung werden im Folgenden anhand der in der Figur schematisch dargestellten und lediglich einen Ausführungsweg zeigenden Feuchtemeßvorrichtung näher erläutert.

Die von der Mikrowellenquelle 1 erzeugten Mikrowellen von z.B. 3 cm Wellenlänge werden mit einem Hub von $\pm$ 25 % Frequenz moduliert. Die Modulationsfrequenz muß dabei so gewählt werden, daß sie größer ist als die Flatterfrequenz der Probe. Diese Flatterfrequenz kann zwischen 0 und 50 Hz und mehr betragen, je nach Art der Probe. Als Flatterfrequenz wird die Bewegung der Probe senkrecht zu ihrer Laufrichtung verstanden. Eine Modulationsfrequenz von 100 Hz hat sich als brauchbar erwiesen. Diese modulierten Mikrowellen werden über einen Hohlleiterkoaxialübergang 4 in einen Mehrlochkoppler 5 mit einem Kopplungsfaktor von 20 dB geleitet. 99 % der Leistung tritt aus dem Mikrowellenstrahler, einem Hornsendestrahler 7 aus und trifft auf die Probe 9. In der Probe 9 wird von der Feuchte ein Teil der Mikrowellenenergie absorbiert. Der hindurchgehende Teil trifft auf den Mikrowellenempfänger, einen Hornstrahler 8 und geht fast ungedämpft durch den Hohlleiter 10 und trifft aus dem Hornstrahler 7a austretend wieder auf die Probe 9. Von der auftreffenden Mikrowellenleistung wird wieder der gleiche Anteil in Abhängigkeit von der Feuchte der Probe 9 absorbiert wie beim ersten Durchstrahlen. In der Figur sind 4 Durchstrahlungen (7 - 8; 7a - 8a; 7b - 8b; 7c - 8c) gezeigt. Damit werden für Feuchten von vollsynthetischen Textilbahnen ausreichende Meßempfindlichkeiten erzielt. Zusätzliche Durchstrahlungen sind leicht realisierbar, in dem weitere Strahler wie vorstehend beschrieben, auf dem Rahmen 14 angeordnet werden. Am letzten Mikrowellenempfänger 8c ist ein Meßdetektor 11 angeflanscht. Aus der gleichgerichteten Detektorspannung und einer konstanten Referenzspannung aus 13 wird in einem Differenzmeßverstärker 12 eine Spannungsdifferenz gebildet. Diese Spannungsdifferenz wird auf Null abgeglichen, wenn sich keine Probe zwischen den Hornstrahlern befindet.Die Spannungsdifferenz wird größer als Null, wenn eine Probe zwischen die Hornstrahler gebracht wird. Dabei wird die Spannungsdifferenz umso größer, je mehr Feuchte in der Probe vorhanden ist. Die durch die Probe absorbierte Mikrowellenenergie und die damit verbundene Spannungsdifferenz wird in Gramm Wasser/m² geeicht. Diese Differenzspannung kann auf einem Anzeigegerät sichtbar gemacht und/oder zur Steuerung einer Regeleinrichtung - z.B. Geschwindigkeitssteuerung einer Trocknungsanlage - benutzt werden.

Der 1%ige Anteil der Mikrowellenleistung, der am Richtungskoppler 5 auf den Regeldetektor 6 ausgekoppelt wird, dient zur Regelung und Konstanthaltung der aus dem ersten Hornstrahler 7 austretenden Mikrowellenleistung. Dazu wird die Spannung von Detektor 6 auf einen Sollwertregler 2 gegeben, der eine PIN-Diode 3 so ansteuert, daß die Mikrowellenquelle 1 immer eine konstante Leistung in den Koaxialhohlleiterübergang 4 einspeist. Diese Leistungsregelung dient der Erhöhung der Meßempfindlichkeit ebenso die Thermostatisierung der Detektoren 6 und 11 (nicht dargestellt).

Patentansprüche:

1. Verfahren zum Messen der Feuchte von flächenförmigen Proben durch Absorption von Mikrowellen, dadurch gekennzeichnet, daß man Mikrowellen mehrmals, vorzugsweise drei- bis fünfmal, durch die Probe strahlt, und zwar so, daß die von einem ersten Mikrowellenempfänger empfangenen Mikrowellen von einem mit diesem Empfänger in Reihe geschalteten Mikrowellenstrahler wieder auf die Probe gesendet werden und sofort, daß man die von der Probe nicht absorbierte Mikrowellenenergie mit einem endständigen Mikrowellenempfänger mit Meßdetektor auffängt daraus eine Gleichspannung erzeugt, aus dieser Gleichspannung und einer konstanten Referenzspannung die Differenz bildet und aus dieser Differenzspannung die Feuchte bestimmt.

2. Verfahren nach Anspruch 1, dadurch gekennzeichnet, daß man die Mikrowellen mit einer Frequenz von 100 Hz und einem Hub von $\pm$ 25 % moduliert.

3. Verfahren nach den Ansprüchen 1 und 2, dadurch gekennzeichnet, daß man vor Durchstrahlen der Probe ca. 1 % der Mikrowellenenergie auskoppelt und damit über eine entsprechende Regeleinrichtung die vom ersten Mikrowellenstrahler abgegebene Mikrowellenenergie konstant hält.

4. Verfahren nach den Ansprüchen 1 bis 3, dadurch gekennzeichnet, daß man den Meßdetektor und die Regeleinrichtung auf konstante Temperatur hält.

5. Vorrichtung zum Durchführen des Verfahrens nach den Ansprüchen 1 bis 4, dadurch gekennzeichnet, daß ein Mikrowellenstrahler (7) mit einem Mikrowellenoszillator (1) verbunden ist, gegenüber dem Mikrowellenstrahler (7) ein erster Mikrowellenempfänger (8) angeordnet ist, der über einen Hohlleiter (10) mit einem zweiten Mikrowellen-

## 0009187
- 7 -    HOE 78/F 193

strahler (7a) verbunden ist, gegenüber diesem zweiten
Mikrowellenstrahler (7a) wieder ein Mikrowellenempfänger
(8a) angeordnet ist und sofort, der letzte Mikrowellenempfänger (8c) einen Meßdetektor (11) mit Gleichrichter
aufweise, der mit einem Differenzverstärker (12) verbunden
ist, an den eine konstante Referenzspannungsquelle (13)
angeschlossen ist.

0009187

**Europäisches Patentamt**

**EUROPÄISCHER RECHERCHENBERICHT**

0009187

Nummer der Anmeldung

EP 79 10 3342

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. ³) |
|---|---|---|---|
| A | FR - A - 2 373 792 (HOECHST A.G.)<br><br>* Ansprüche 1,2; Abbildung 1 *<br><br>---- | 1 | G 01 N 22/04 |

**RECHERCHIERTE SACHGEBIETE (Int. Cl. ³)**

G 01 N 22/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-11-1979 | MALIC |

EPA form 1503.1  06.78